# EUROPEAN PATENT APPLICATION

(11) **EP 4 654 452 A1**
(43) Date of publication of application: **26.11.2025**
(21) Application number: 23917605.0
(22) Date of filing: 03.10.2023
(51) Int. Cl.: H02M 3/155, H02M 7/12

(54) **PARALLEL CONTROL SYSTEM OF POWER CONVERSION DEVICE**

(30) Priority: 18.01.2023 JP 2023005960
(71) Applicant: Hitachi Industrial Equipment Systems Co., Ltd., Tokyo 101-0021 (JP)
(72) Inventor: UEI, Yusuke, Tokyo 101-0021 (JP); ISHIGAKI, Takuya, Tokyo 101-0021 (JP); WATABE, Yoshihisa, Tokyo 101-0021 (JP)
(74) Representative: MERH-IP Matias Erny Reichl Hoffmann Patentanwälte PartG mbB
(86) International application number: PCT/JP2023/035993
(87) International publication number: WO 2024/154393

(57) **Abstract**

The present invention suppresses current pulsation in a parallel control system for power conversion devices comprising a plurality of power conversion devices. This parallel control system for power conversion devices having a first power conversion device and a second power conversion device connected to a load device comprises: a current detection unit that detects an input current of the first power conversion device; and a phase adjustment unit that determines the phase difference between a control signal of the first power conversion device and a control signal of the second power conversion device such that pulsation of the input current is reduced on the basis of the amplitude of the detected input current.

## Description

### TECHNICAL FIELD

The present invention relates to a parallel control system for power conversion devices.

### BACKGROUND ART

Patent Document 1 is known as background art in this technical field. Patent Document 1 discloses "a parallel operation control system that enables equal sharing of nonlinear loads, such as rectifier loads, even when line impedances are different and enables a stable parallel operation of each conversion device".

### CITATION LIST

### PATENT DOCUMENT

Patent Document 1: JP 2009-141997 A

### SUMMARY OF THE INVENTION

### PROBLEMS TO BE SOLVED BY THE INVENTION

Patent Document 1 clearly states that the parallel operation control system is provided which controls an output voltage command, using an active current detection means for calculating an active current from an output current and a phase adjustment means for controlling a reference phase of an output voltage such that each conversion device can perform a stable parallel operation.

Meanwhile, current pulsation may occur on the input power supply side, depending on the number of power conversion devices connected and a system configuration, and attention needs to be paid to the input power supply side.

An object of the present invention is to suppress current pulsation in a parallel control system for power conversion devices that includes a plurality of power conversion devices.

### SOLUTIONS TO PROBLEMS

According to the present invention, there is provided a parallel control system for power conversion devices that has a first power conversion device and a second power conversion device connected to a load device. The parallel control system for power conversion devices includes: a current detection unit detecting an input current of the first power conversion device; and a phase adjustment unit calculating a phase difference between a control signal of the first power conversion device and a control signal of the second power conversion device, based on an amplitude of the detected input current, such that pulsation of the input current is reduced.

### EFFECTS OF THE INVENTION

According to the present invention, it is possible to suppress current pulsation in a parallel control system for power conversion devices that includes a plurality of power conversion devices.

### BRIEF DESCRIPTION OF THE DRAWINGS

Fig. 1 is a schematic diagram showing a parallel control system for power conversion devices as Embodiment 1.
Fig. 2 is a diagram showing a configuration of an ACDC conversion circuit and a DCDC conversion circuit used in a power conversion device in this embodiment.
Fig. 3 is a control block diagram showing the power conversion device.
Fig. 4 is a control block diagram showing a phase adjuster.
Fig. 5 is a diagram showing an example of PWM generation when an input-side control PWM phase difference is introduced between the power conversion devices.
Fig. 6A is a diagram showing current pulsation when the input-side control PWM phase difference between the power conversion devices is set to 0.
Fig. 6B is a diagram showing current pulsation when the input-side control PWM phase difference between the power conversion devices is set to 60.
Fig. 6C is a diagram showing current pulsation when the input-side control PWM phase difference between the power conversion devices is set to 120.
Fig. 6D is a diagram showing current pulsation when the input-side control PWM phase difference between the power conversion devices is set to 180.
Fig. 7 is a diagram showing an example of current pulsation by phase adjustment and acquisition of a maximum value.
Fig. 8 is a flowchart showing a process of the phase adjuster.
Fig. 9 is an explanatory diagram showing a case where a maximum current amplitude value for each phase adjustment is saved in a storage device.

### MODE FOR CARRYING OUT THE INVENTION

Hereinafter, embodiments of the present invention will be described with reference to the drawings.

### [Embodiment 1]

In this embodiment, a phase difference between input-power-supply-side PWM waveforms of two or more power conversion devices that are connected in parallel is changed a plurality of times, and an input power supply current amplitude value at that time is measured. In this embodiment, the input power supply current amplitude value at the time of an operation under the same conditions is stored and compared every time the phase difference is changed, and the phase difference when the input power supply current amplitude value is the smallest is automatically determined.

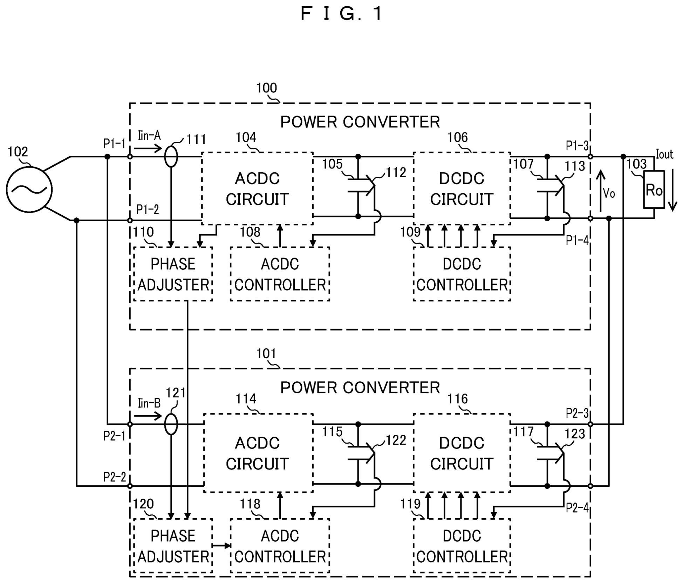

First, an example of an adjustment function of automatically adjusting a phase of a PWM waveform for controlling an input-side current, using two power conversion devices including phase adjusters, will be described. Fig. 1 is a schematic diagram showing a parallel control system for power conversion devices that has an automatic phase adjustment function according to this embodiment.

In Fig. 1, 100 and 101 indicate a first power conversion device and a second power conversion device, respectively. 102 indicates an alternating-current power supply. 103 indicates a target load device connected to the power conversion device 100 and the power conversion device 101. The power conversion device 100 and the alternating-current power supply 102 are connected through an input terminal P1-1 and an input terminal P1-2, and the power conversion device 101 and the alternating-current power supply 102 are connected through an input terminal P2-1 and an input terminal P2-2.

Meanwhile, the power conversion device 100 and the target load 103 are connected through an output terminal P1-3 and an output terminal P1-4, and the power conversion device 101 and the target load 103 are connected through an output terminal P2-3 and an output terminal P2-4.

104 indicates an ACDC circuit that converts an alternating current from the alternating-current power supply 102 into a direct current and charges an intermediate capacitor 105 with charge, and a circuit configuration thereof in the embodiment will be described below.

106 indicates a DC/DC converter that transforms the direct-current voltage converted by the ACDC circuit 104 into a direct-current voltage to be output from the output terminals P1-3 and P1-4 by the power conversion device 100, and a circuit configuration thereof in the embodiment will be described below. An output-side capacitor 107 is a capacitor for stabilizing an output voltage.

108 indicates an ACDC controller that controls the rectification of the input alternating current into a direct current by the ACDC circuit 104 and the supply of power to the intermediate capacitor 105, and 109 indicates a DCDC controller that controls the output voltage from the DCDC circuit 106. The operation of these controllers in this embodiment will be described below.

110 indicates a phase adjuster that changes a phase difference between the switching of a semiconductor element driven in the ACDC circuit 104 of the power conversion device 100 and the switching of a semiconductor element driven in the ACDC circuit 114 of the power conversion device 101 and sets an optimal phase difference based on a current amplitude value at that time.

111 indicates a current detector that sequentially measures an input power supply current value and inputs the measured input power supply current value to the phase adjuster 110. The input current detection value is used to determine phase adjustment.

112 and 113 indicate voltage detectors that measure a voltage between positive and negative electrodes of the intermediate capacitor 105 and a voltage between positive and negative electrodes of the output capacitor 107, respectively, and input the voltages to the ACDC controller 108 and the DCDC controller 109, respectively. The input voltage detection values are used as control target values for the respective voltage values.

Since an ACDC circuit 114, an intermediate capacitor 115, a DCDC circuit 116, an output-side capacitor 117, an ACDC controller 118, a DCDC controller 119, a phase adjuster 120, a current detector 121, and voltage detectors 122 and 123 included in the power conversion device 101 are the same devices as those in the power conversion device 100, a description thereof will be omitted.

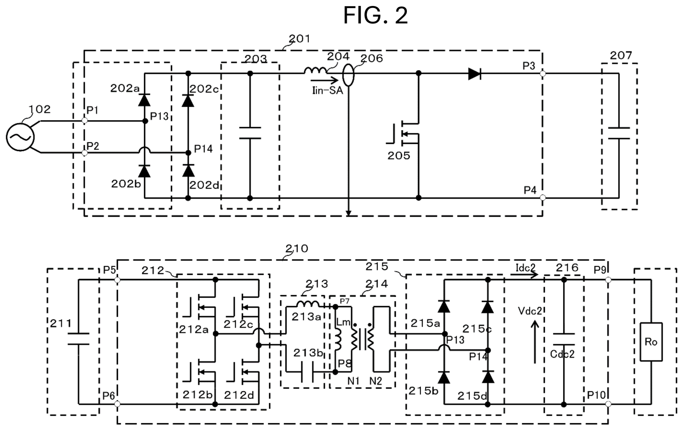

Fig. 2 shows a circuit configuration diagram of the ACDC circuit 104 or the ACDC circuit 114 and a circuit configuration diagram of the DCDC circuit 106 or the DCDC circuit 116 shown in Fig. 1.

201 indicates an ACDC conversion circuit diagram of the ACDC circuit 104 or the ACDC controller 108 shown in Fig. 1. In the ACDC conversion circuit diagram 201, the alternating-current power supply 102 is connected to an input terminal P1 and an input terminal P2 and is connected to each of a plurality of diodes 202a to 202d.

These diodes 202a to 202d are connected in a bridge configuration as shown in Fig. 2. For example, an anode-side end of the diode 202a and a cathode-side end of the diode 202b are connected to one input terminal P1 of the alternating-current power supply 102 as shown in Fig. 2. An anode-side end of the diode 202c and a cathode-side end of the diode 202d are connected to the other input terminal P2 of the alternating-current power supply 102 as shown in Fig. 2.

A cathode-side end of the diode 202a and a cathode-side end of the diode 202c are connected to one electrode of an intermediate capacitor 203 and a reactor 204 as shown in Fig. 2. An anode-side end of the diode 202b and an anode-side end of the diode 202d are connected to the other electrode of the intermediate capacitor 203 and an end of a semiconductor element 205 as shown in Fig. 2.

When the voltage of the input terminal P1 is higher than the voltage of the input terminal P2, the current of the intermediate capacitor 203 is rectified by the diodes 202a and 202d. On the other hand, when the voltage of the input terminal P2 is higher than the voltage of the input terminal P1, the current of the intermediate capacitor 203 is rectified by the diodes 202c and 202b.

In the intermediate capacitor 203, when the semiconductor element 205 is turned on, the current flows through the reactor 204 and the semiconductor element 205, and energy is stored in the reactor 204. On the other hand, when the semiconductor element 205 is turned off, the current flows to an intermediate capacitor 207 by the voltage across the intermediate capacitor 203 and the energy stored in the reactor 204 such that the intermediate capacitor 207 is charged. In addition, a current detector 206 detects a rectified current Iin-SA flowing through the reactor 204 in the ACDC circuit.

210 indicates a DCDC conversion circuit of the DCDC circuit 106 or the DCDC circuit 116 shown in Fig. 1. In the DCDC conversion circuit 210, one electrode of an intermediate capacitor 211 is connected to an input terminal P5, and the other electrode thereof is connected to the input terminal P5. Here, the ACDC conversion circuit and the DCDC conversion circuit are described separately. However, in this embodiment, as shown in Fig. 1, the DCDC circuit is provided in a stage behind the ACDC circuit, and the intermediate capacitor 207 and the intermediate capacitor 211 are the same.

A primary-side semiconductor element 212 switches the voltage input to a resonant element 213 at a predetermined switching frequency. As shown in Fig. 2, the primary-side semiconductor element 212 includes a plurality of switching elements 212a to 212d which are MOSFETs such as N-channel MOSs (NMOSs). These switching elements 212a to 212d are connected in a bridge configuration as shown in Fig. 2.

For example, one end of the switching element 212a and one end of the switching element 212c are connected to one input terminal P5 of the DCDC circuit 210 as shown in Fig. 2. One end of the switching element 212b and one end of the switching element 212d are connected to the other input terminal P6 of the DCDC circuit 210 as shown in Fig. 2.

The other end of the switching element 212a and the other end of the switching element 212b are connected to a resonant inductor 213a of the resonant element 213 which will be described below. The other end of the switching element 212c and the other end of the switching element 212d are connected to a resonant capacitor 213b of the resonant element 213 which will be described below.

Switching control signals Vg1 to Vg4 output from the DCDC controller, which will be described below, are input to gates of the switching elements 212a to 212d, respectively. The switching elements 212a to 212d switch on and off based on the corresponding switching control signals Vg1 to Vg4, respectively. For example, when the switching element is configured as an NMOS and a high-level switching control signal is input to the gate, the switching element is turned on. On the other hand, when a low-level switching control signal is input to the gate, the switching element is turned off.

The switching elements 212a to 212d are repeatedly turned on and off based on the switching control signals Vg1 to Vg4, respectively, to input a pulsed voltage to the resonant element 213. For example, when the switching elements 212a and 212d are in an on state and the switching elements 212b and 212c are in an off state, a predetermined voltage (Vin) is input to the resonant element 213. On the other hand, when the switching elements 212a and 212d are in the off state and the switching elements 212b and 212c are in the on state, a predetermined voltage (-Vin) is input to the resonant element 213. These operations are repeated to input a pulsed voltage with a predetermined amplitude (Vin) to the resonant element 213.

As shown in Fig. 2, the resonant element 213 includes the resonant inductor 213a and the resonant capacitor 213b. As shown in Fig. 2, one end of the resonant inductor 213a is connected to the other end of the switching element 212a and the other end of the switching element 212b. In addition, as shown in Fig. 2, the other end of the resonant inductor 213a is connected to a transformer 214 through one input terminal P7 of the transformer 214.

As shown in Fig. 2, one end of the resonant capacitor 213b is connected to the transformer 214 through the other input terminal P8 of the transformer 214. In addition, as shown in Fig. 2, the other end of the resonant capacitor 213b is connected to the other end of the switching element 212c and the other end of the switching element 212d.

The resonant inductor 213a and the resonant capacitor 213b are connected in series. Further, it is assumed that resonant inductance Lr of the resonant inductor 213a includes leakage inductance (not shown) of the transformer 214. The resonant inductance and the leakage inductance have a series relationship therebetween.

In Fig. 2, the resonant inductor 213a and the resonant capacitor 213b are disposed separately through the transformer 214, but the present invention is not limited to this disposition. For example, the resonant inductor 213a and the resonant capacitor 213b may be disposed on the side of the resonant inductor 213a as shown in Fig. 2 or may be disposed on the side of the resonant capacitor 213b. The above-described pulsed voltage is input to the resonant element 213 by the primary-side semiconductor element 212. When the pulsed voltage is input, a sinusoidal current with a resonant frequency F0 that is defined based on the resonant inductance Lr and the resonant capacitance Cr flows through the resonant element 213 and the transformer 214.

As shown in Fig. 2, in the transformer 214, the number of turns in a primary coil is N1, the number of turns in a secondary coil is N2, and excitation inductance is Lm. The transformer 214 converts the voltage Vin across the intermediate capacitor 211 through the resonant element 213 into a predetermined output voltage (Vo) on the secondary side and outputs the converted output voltage (Vo) to the target load 103 connected outside the DCDC circuit 210.

A secondary-side semiconductor element 215 is an element that rectifies a current on the secondary side of the transformer 214. As shown in Fig. 2, the secondary-side semiconductor element includes a plurality of diodes 215a to 215d. These diodes 215a to 215d are connected in a bridge configuration as shown in Fig. 2. For example, an anode-side end of the diode 215a and a cathode-side end of the diode 215b are connected to one output terminal P213 of the transformer 214 as shown in Fig. 2. An anode-side end of the diode 215c and a cathode-side end of the diode 215d are connected to the other output terminal P214 of the transformer 214 as shown in Fig. 2.

A cathode-side end of the diode 215a and a cathode-side end of the diode 215c are connected to one electrode of an output-side capacitor 216 and one output terminal P9 of the DCDC circuit 210 as shown in Fig. 2. An anode-side end of the diode 215b and an anode-side end of the diode 215d are connected to the other electrode of the output-side capacitor 216 and the other output terminal P10 of the DCDC circuit 210 as shown in Fig. 2.

When the voltage of the output terminal P9 is higher than the voltage of the output terminal P10, the current on the secondary side of the transformer 214 is rectified by the diodes 215a and 215d. On the other hand, when the voltage of the output terminal P10 is higher than the voltage of the output terminal P9, the current on the secondary side of the transformer 214 is rectified by the diodes 215c and 215b.

The output-side capacitor 216 is a capacitor for stabilizing the output voltage. The DCDC circuit 210 detects the voltage between both electrodes of the output-side capacitor 216 (the voltage between the output terminals P9 and P10) as the output voltage (Vo) and outputs information of the detected output voltage (Vo) to the DCDC controller 109 or the DCDC controller 119. In addition, the DCDC circuit 210 outputs the output voltage (Vo) to the target load 103 through the output terminals P9 and P10.

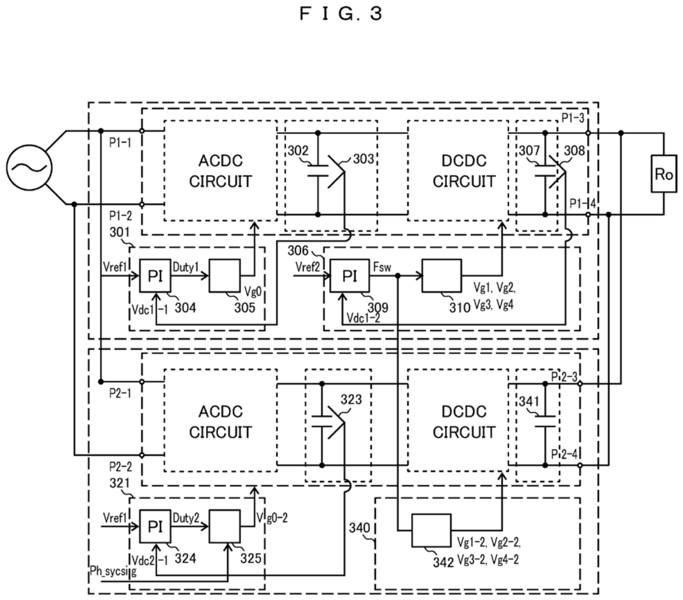

With reference to Fig. 3, an output voltage control method of the power conversion device in this embodiment will be described. The power conversion device 100 and the power conversion device 101 shown in Fig. 1 include the ACDC controllers 108 and 118 that control the voltages across the intermediate capacitor 105 and the intermediate capacitor 115 connected to the ACDC circuit 104 and the ACDC circuit 114, respectively, and the DCDC controllers 109 and 119 that control the voltages across the output-side capacitor 107 and the output-side capacitor 117 connected to the DCDC circuit 106 and the DCDC circuit 116, respectively.

An ACDC controller 301 shown in Fig. 3 is a block diagram that detects an ACDC output voltage Vdc1-1 using a voltage detector 303 attached between both electrodes of the intermediate capacitor 302 and controls the ACDC output voltage Vdc1-1 to be an ACDC voltage command value Vref1.

The ACDC voltage command value Vref1 and the ACDC voltage detection value Vdc1-1 are input to a voltage control arithmetic unit 304. Here, the voltage control arithmetic unit 304 is a general PI controller. The voltage control arithmetic unit 304 calculates an ACDC control signal Duty1, which is the ratio of the on time to the off time of the semiconductor element provided in the ACDC circuit, based on the ACDC voltage command value Vref1 and the ACDC voltage detection value vdc1-1 and inputs the calculated ACDC control signal Duty1 to an ACDC-side gate signal generator 305. The semiconductor element provided in the ACDC circuit described here is the semiconductor element 205 shown in Fig. 2.

That is, when the ACDC voltage command value Vref1 is larger than the ACDC voltage detection value Vdc1-1, the ACDC control signal Duty1 is calculated to lengthen the on time of the semiconductor element in the ACDC circuit in order to increase the ACDC voltage detection value Vdc1-1.

On the other hand, when the ACDC voltage command value Vref1 is smaller than the ACDC voltage detection value Vdc1-1, the ACDC control signal Duty1 is calculated to shorten the on time of the semiconductor element in the ACDC circuit in order to decrease the ACDC voltage detection value vdc1-1.

The ACDC-side gate signal generator 305 inputs an ACDC control gate signal Vg0 for driving the semiconductor element to the ACDC control circuit according to the ACDC control signal Duty1 to turn on and off the semiconductor element in the ACDC circuit, thereby controlling the voltage across the intermediate capacitor 302.

A DCDC controller 306 is a block diagram that detects a DCDC output voltage Vdc1-2 using a voltage detector 308 attached between both electrodes of an output-side capacitor 307 and controls the DCDC output voltage Vdc1-2 to be a DCDC voltage command value Vref2.

The DCDC voltage command value Vref2 and the DCDC voltage detection value Vdc1-2 are input to a voltage control arithmetic unit 309. Here, the voltage control arithmetic unit 309 is a general PI controller. The voltage control arithmetic unit 309 calculates a DCDC-side switching frequency Fsw of the semiconductor element provided in the DCDC circuit, based on the DCDC voltage command value Vref2 and the DCDC voltage detection value Vdc1-2, and inputs the calculated DCDC-side switching frequency Fsw to a DCDC-side gate signal generator 310. Further, the semiconductor element provided in the DCDC circuit described here is the switching elements 212a to 212d shown in Fig. 2.

That is, when the DCDC voltage command value Vref2 is larger than the DCDC voltage detection value Vdc1-2, the DCDC-side switching frequency Fsw is calculated such that the switching frequency of the semiconductor element in the DCDC circuit is reduced, in order to increase the DCDC voltage detection value Vdc1-2.

On the other hand, when the DCDC voltage command value Vref2 is smaller than the DCDC voltage detection value Vdc1-2, the DCDC-side switching frequency Fsw is calculated such that the switching frequency of the semiconductor element in the DCDC circuit is increased, in order to decrease the DCDC voltage detection value Vdc2.

The DCDC-side gate signal generator 310 inputs DCDC control gate signals Vg1 to Vg4 for driving semiconductor elements 1 to 4 to a DCDC control circuit according to the DCDC-side switching frequency Fsw to control the voltage across the output-side capacitor 307.

The power conversion device 101 connected to the target load 103 in parallel to the power conversion device 100 includes an ACDC controller 321 and a DCDC controller 340.

The ACDC controller 321 provided in the power conversion device 101 includes a voltage control arithmetic unit 324 and an ACDC-side gate signal generator 325, similarly to the ACDC controller 301 provided in the power conversion device 100. Since the voltage control arithmetic unit 324 operates in the same manner as the voltage control arithmetic unit 304, a description thereof will be omitted here.

As in the ACDC-side gate signal generator 305, an ACDC control signal Duty2 calculated by the voltage control arithmetic unit 324 is input to the ACDC-side gate signal generator 325. The ACDC-side gate signal generator 325 generates an ACDC control gate signal Vg0-2, similarly to the ACDC-side gate signal generator 305. Here, a synchronization signal Ph_sycsig is input to the ACDC-side gate signal generator 325, and a means, which will be described below, is used to generates a phase difference between the ACDC control gate signal Vg0 and the ACDC control gate signal Vg0-2 according to the synchronous signal Ph_sycsig.

The DCDC controller 340 controls the voltage across an output-side capacitor 341. The DCDC controller 340 receives the DCDC-side switching frequency Fsw calculated by the DCDC controller 306 provided in the power conversion device 100, and the DCDC-side switching frequency Fsw is input to a DCDC-side gate signal generator 342 for control at the same DCDC side switching frequency Fsw as that in the power conversion device 101.

However, the DCDC controller 306 and the DCDC controller 340 may use a current control block in a stage behind a voltage control block in order to suppress current imbalance of the power conversion devices connected in parallel and to improve current responsivity. In this case, an output current command value is generated by the voltage control block and input to the current control block.

The current control block performs a general PI control calculation on the amount of deviation between the output current command value and the output current detection value to calculate the DCDC-side switching frequency Fsw and inputs DCDC control gate signals Vg1-2 to Vg4-2 to the DCDC-side gate signal generator 342.

The DCDC-side gate signal generator 342 is a component that inputs the DCDC control gate signals Vg1-2 to Vg4-2 for driving the semiconductor elements 1 to 4 to the DCDC control circuit according to the DCDC-side switching frequency Fsw to control the voltage across the output-side capacitor 341.

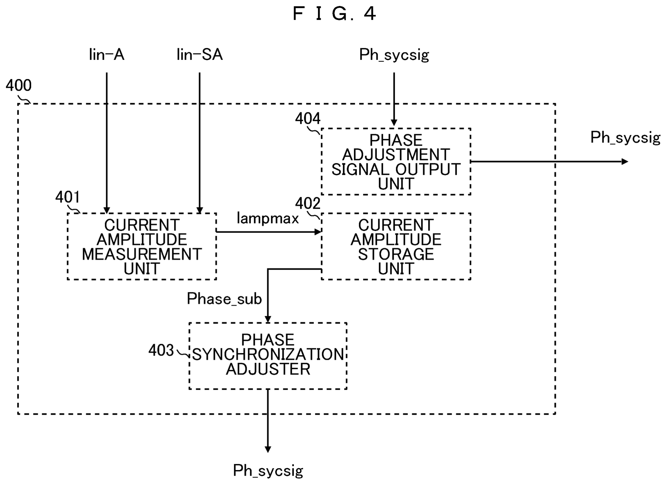

Fig. 4 is an explanatory diagram showing a phase adjuster. The phase adjuster 400 includes a current amplitude measurement unit 401, a current amplitude storage unit 402, a phase synchronization adjuster 403, and a phase adjustment signal output device 404. The phase adjuster 400 is configured to include, for example, a microcomputer having a central processing unit (CPU), a read only memory (ROM), a random access memory (RAM), input/output ports, and the like, and various circuits. The CPU of the microcomputer reads out a program stored in the ROM and executes the program to implement a process of calculating a phase difference, which will be described below.

The phase adjuster 400 is an adjuster that changes the PWM phases of the input power supply circuits of two or more power conversion devices that are connected in parallel, measures the input current amplitude values thereof, stores the measured input current amplitude values, and determines a phase difference at which the input current amplitude value is decreased.

In addition, the phase adjuster is configured such that one power conversion device transmits a synchronization signal Ph_sycsig, which will be described below, and the other power conversion device receives the synchronization signal Ph_sycsig at regular intervals. In this embodiment, it is assumed that the power conversion device that transmits the synchronization signal Ph_sycsig is the power conversion device 100 and the power conversion device that receives the synchronization signal Ph_sycsig is the power conversion device 101.

The current amplitude measurement unit 401 receives an input current Iin-A or a rectified current Iin-SA provided in the ACDC circuit and sequentially acquires an input current amplitude in a current amplitude measurement section Ph_time. The current amplitude measurement unit 401 measures the maximum value of the amplitude of the sequentially acquired input current Iin-A for each period and measures a maximum current amplitude value Iampmax which is the largest amplitude value. In this embodiment, since a phase adjustment method for suppressing current pulsation of the input current Iin-A is described in this embodiment, a description of the rectified current Iin-SA is omitted. It is possible to suppress current pulsation of the rectified current Iin-SA using the same method.

When the measurement of the maximum current amplitude value Iampmax is completed, the maximum current amplitude value Iampmax of the input current amplitude and a phase difference adjustment amount Phase_sub at that time are stored in the current amplitude storage unit 402.

When the maximum current amplitude value Iampmax of the input current amplitude is updated during phase adjustment, the current amplitude storage unit 402 changes the phase difference adjustment amount Phase_sub in order to change the phase and inputs the changed phase difference adjustment amount Phase_sub to the phase synchronization adjuster 403.

The phase synchronization adjuster 403 inputs the phase difference adjustment amount Phase_sub to the ACDC controller according to the phase difference adjustment amount Phase_sub and determines a PWM phase difference between the ACDC circuits of the power conversion device 100 and the power conversion device 101. In this embodiment, the power conversion device 100 is configured to transmit the synchronization signal Ph_sycsig to the phase adjuster of the power conversion device 101, and this operation is not performed in the power conversion device 101.

When the phase adjustment signal output unit 404 receives the synchronization signal Ph_sycsig output from the other power conversion device, it outputs the synchronization signal Ph_sycsig to the ACDC controller. The ACDC controller updates a timer counter at the timing when the synchronization signal Ph_sycsig is received to generate an input-side control PWM phase difference between the power conversion device 100 and the power conversion device 101. In this embodiment, the power conversion device 101 is configured to receive the synchronization signal Ph_sycsig, and this operation is not performed in the power conversion device 100.

That is, in this embodiment, the phase synchronization adjuster 403 provided in the power conversion device 100 transmits the synchronization signal Ph_sycsig. The synchronization signal Ph_sycsig is received by a phase signal output unit provided in the power conversion device 101, and the PWM phase difference between the ACDC circuits is set.

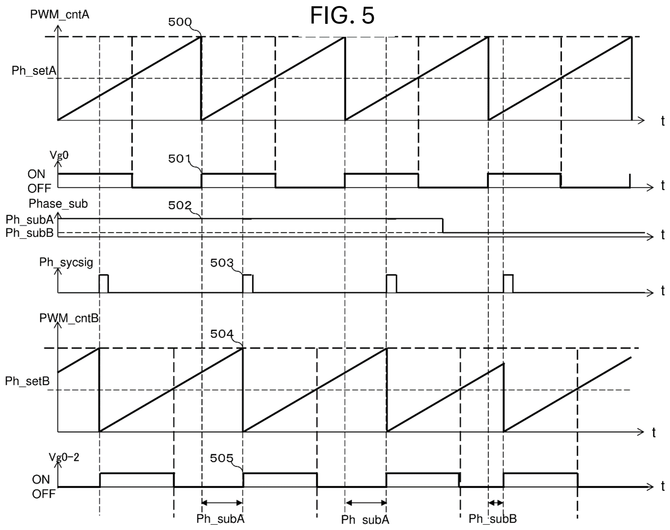

Fig. 5 is an explanatory diagram showing the ACDC control gate signals Vg0 and Vg0-2 output by the ACDC controllers of the power conversion devices 100 and 101, respectively, and the phase adjustment of the ACDC control signals.

A waveform 500 indicates PWM_cntA and a waveform 504 indicates PWM_cntB, which are timer counters for generating PWM. Signals 501 and 505 are signals for turning on and off the ACDC control gate signals Vg0 and Vg0-2 for driving the semiconductor elements of the ACDC circuit 104 and the ACDC circuit 114, respectively.

A graph 502 shows the value of the phase difference Phase_sub.

A signal 503 indicates a signal aspect of the synchronization signal Ph_sycsig for adjusting the phase difference between the power conversion device 100 and the power conversion device 101.

The timer counter PWM_cntA is a timer counter value that counts up at regular intervals. When the timer counter reaches a maximum timer counter value PWM_cntAmax, the timer counter PWM_cntA is zero and starts counting up again.

When the value of the timer counter PWM_cntA is larger than a PWM output setting value PWM_setA, the ACDC control gate signal Vg0 is output in an off state. When the value of the timer counter PWM_cntA is equal to or less than the PWM output set value PWM_setA, the ACDC control gate signal Vg0 is output in an on state. In addition, the same applies to the timer counter PWM_cntB.

The synchronization signal Ph_sycsig is a synchronization signal for the ACDC control gate signals Vg0 and Vg0-2. The synchronization signal Ph_sycsig is output from the phase adjuster 110, and the timer counter PWM_cntB starts counting up at the timing when the power conversion device 101 receives the synchronization signal Ph_sycsig.

Further, the phases of the ACDC control gate signals Vg0 and Vg0-2 can be shifted by delaying the output timing of the synchronization signal by the phase difference adjustment amount Phase_sub from the start of the counting-up of the timer counter PWM_cntA. Fig. 5 shows that the phase difference between the ACDC control gate signals Vg0 and Vg0-2 when the phase difference adjustment amount Phase_sub is set to Ph_subA is Ph_subA and the phase difference between the ACDC control gate signals Vg0 and Vg0-2 when the phase difference adjustment amount Phase_sub is set to Ph_subB is Ph_subB.

As shown in Figs. 4 and 5, in a state in which the ACDC control gate signals Vg0 and Vg0-2 are shifted by the phase difference adjustment amount Phase_sub, the current amplitude measurement unit 401 acquires the maximum current amplitude value and stores the maximum current amplitude value in the current amplitude storage unit 402. Then, the current amplitude measurement unit can measure the maximum current amplitude value Iampmax while changing the phase difference adjustment amount Phase_sub and acquire the phase difference adjustment amount Phase_sub at which the maximum current amplitude value Iampmax is reduced.

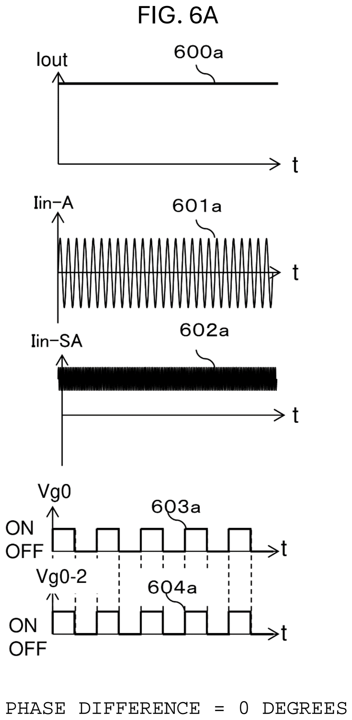

Figs. 6A to 6D show changes in the input current Iin-A and the ACDC-rectified current Iin-SA when a constant output current Iout flows through the target load 103 in a case where the counting-up timings of the timer counter PWM_cntA and the timer counter PWM_cntB deviate from each other and the phase difference between the ACDC control gate signal Vg0 and the ACDC control gate signal Vg0-2 of the power conversion device 100 and the power conversion device 101 is changed to 0 degrees, 60 degrees, 120 degrees, and 180 degrees.

Waveforms 600a to 600d are the detection values of the current flowing through the target load 103. Each waveform shows that the same current value flows for a set phase difference.

Waveforms 601a to 601d are waveforms of the input current supplied from the input power supply to the power conversion device. In the waveform representation, the vertical axis is a current value and the horizontal axis is time.

Waveforms 602a to 602d are current waveforms acquired by the current detector attached to the ACDC circuit. In the waveform representation, the vertical axis is a current value and the horizontal axis is time.

Waveforms 603a to 603d are waveforms of the ACDC control gate signal Vg0 of the power conversion device 100. In the waveform representation, the vertical axis is represented by two values of on and off and the horizontal axis is time. Waveforms 604a to 604d are waveforms of the ACDC control gate signal Vg0-2 of the power conversion device 101. In the waveform representation, the vertical axis is represented by two values of on and off and the horizontal axis is time.

As represented by the waveforms 600a, 601a, 602a, 603a, and 604a, when the phase difference is 0 degrees, the pulsation of the input current value and the rectified current value of the ACDC circuit is large. This indicates that, since the ACDC control gate signal Vg0 of the power conversion device 100 and the ACDC control gate signal Vg0-2 of the power conversion device 101 are turned on at the same timing, the load on the input power supply side increases, and the pulsation of the current increases.

Furthermore, when the phase difference is 60 degrees and 120 degrees, the waveforms 601b, 602b, 601c, and 602c show that the pulsation of the input current and the rectified current value of the ACDC circuit is small.

On the other hand, when the phase difference is 180 degrees, the waveforms 601d and 602d show that the pulsation of the input current and the rectified current value of the ACDC circuit is large. This indicates that current pulsation occurs due to resonance between the natural vibration frequency of a system configured on the input power supply side and the operating frequencies of the ACDC control gate signal Vg0 of the power conversion device 100 and the ACDC control gate signal Vg0-2 of the power conversion device 101.

However, the current pulsation does not necessarily occur since the natural frequency differs depending on the system configured on the input power supply side. In addition to the above, the pulsation is likely to occur due to various factors such as interference due to influence of control associated with an increase in the number of devices connected. The present invention also covers the suppression of current pulsation caused by factors other than those described in this embodiment.

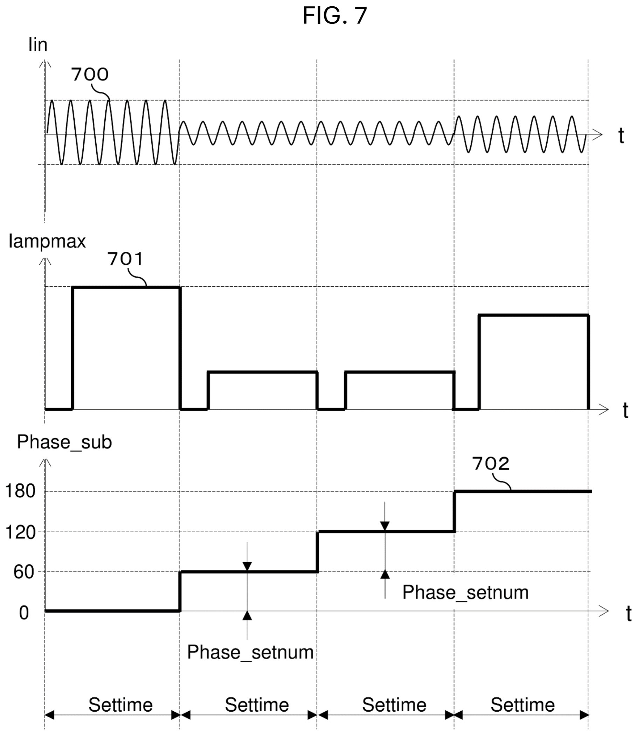

Fig. 7 is a diagram showing that the phase difference adjustment amount Phase_sub is changed, the input current amplitude value in the section of the measurement timer counter Settime or the current value flowing in the ACDC circuit is measured for each set phase difference adjustment amount Phase_sub, and the maximum amplitude value is measured.

A waveform 700 is a waveform of the input current. In the waveform representation, the vertical axis is a current value and the horizontal axis is time. In the representation of a waveform 701, the vertical axis is the maximum current amplitude value Iampmax, and the horizontal axis is time. The maximum current amplitude value Iampmax is obtained by measuring the amplitude value of the input current Iin for each set phase difference adjustment amount Phase_sub according to a phase adjustment function procedure, which will be described below, and latching the maximum amplitude value of the input current. In this embodiment, the maximum amplitude value of the input current Iin when the phase difference adjustment amount Phase_sub is changed every 60 degrees is latched.

The maximum current amplitude value Iampmax latched for each phase difference adjustment amount Phase_sub is saved in the current amplitude storage unit 402 when the phase difference adjustment amount Phase_sub is changed. In the representation of the phase difference adjustment amount Phase_sub, the vertical axis is the phase difference between the timer counter PWM_cntA and the timer counter PWM_cntB, and the horizontal axis is time. The phase difference adjustment amount Phase_sub is changed by a phase adjustment width Phase_setnum for each measurement timer counter Settime.

That is, the amplitude value of the input current Iin is measured in a state in which the phases of the ACDC control gate signals Vg0 and Vg0-2 are changed each time the phase difference adjustment amount Phase_sub is changed, and the maximum current amplitude value is latched as Iampmax. The latched maximum current amplitude value Iampmax is stored in the current amplitude storage unit 402 after the measurement timer counter Settime has elapsed since the change in the phase difference adjustment amount Phase_sub, which makes it possible to acquire the maximum current amplitude value Iampmax for each phase difference adjustment amount Phase_sub.

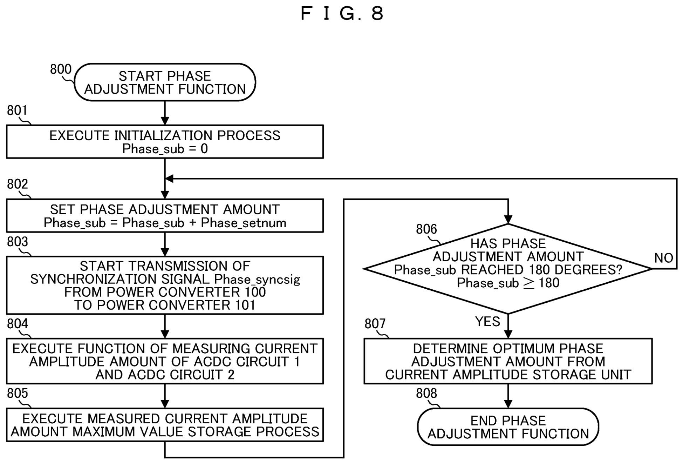

Fig. 8 is a flowchart showing a process of the phase adjuster 400. Fig. 8 is a flowchart showing a process that measures the input current amplitude value for each phase difference while automatically changing the phase difference between the power conversion device 100 and the power conversion device 101 and sets the phase difference at which the amplitude value of the input current is the smallest.

The phase adjuster 400 starts a phase adjustment function in Process 800 and proceeds to Process 801.

In Process 801, the phase adjuster 400 initializes the number of phase adjustment trials Searchcnt used in the phase adjustment function. After executing the initialization, the phase adjuster 400 proceeds to Process 802.

In Process 802, the phase synchronization adjuster 403 counts up the phase difference adjustment amount Phase_sub, which is the setting value of the phase difference between the PWM timer counters of the power conversion device 100 and the power conversion device 101, by the phase adjustment width Phase_setnum. For example, when the phase difference between the PWM timer counters is adjusted every 30 degrees, the phase adjustment width Phase_setnum is 30. After counting up the phase difference adjustment amount Phase_sub, the phase synchronization adjuster 403 proceeds to Process 803.

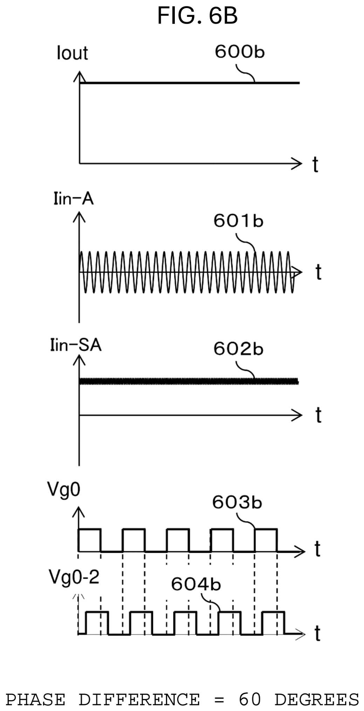

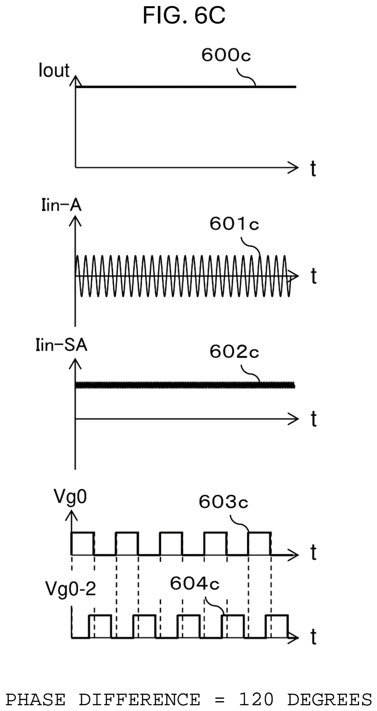

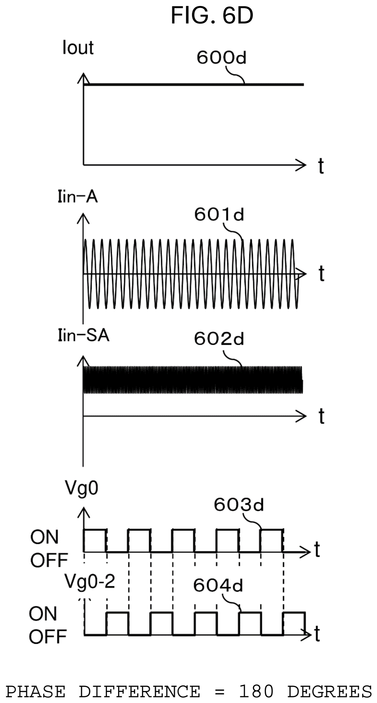

In Process 803, the phase synchronization adjuster 403 starts transmitting the synchronization signal Phase_sycsig from the power conversion device 100 to the power conversion device 101 according to the phase difference adjustment amount Phase_sub set in Process 802. The synchronization signal Phase_sycsig is output with the period of the PWM timer counter as shown in Fig. 6. When the output of the synchronization signal Phase_sycsig starts, the phase adjustment process proceeds to Process 804.

In Process 804, the current amplitude measurement unit 401 measures the amplitude value of the input current Iin-A in the measurement section Settime in the procedure shown in Fig. 7 and latches the largest amplitude value among the amplitude values of the input current Iin-A in one period as the maximum current amplitude value Iampmax.

In addition, the maximum current amplitude value Iampmax may not be the amplitude of the current value Iin in one period, but may be the average amplitude value of the amplitude values of the input current Iin-A in the measurement section Settime.

In Process 805, the current amplitude storage unit 402 stores, in the current amplitude storage unit 402, the maximum current amplitude value Iampmax measured in Process 804 and the phase difference adjustment amount Phase_sub at the time of the measurement. After the maximum current amplitude value Iampmax and the phase difference adjustment amount Phase_sub are stored in the current amplitude storage unit 402, the phase adjustment process proceeds to Process 806.

In Process 806, the phase synchronization adjuster 403 determines whether the value of the phase difference adjustment amount Phase_sub is equal to or less than 180 degrees. When the value of the phase difference adjustment amount Phase_sub has reached 180 degrees, the phase synchronization adjuster 403 proceeds to Process 807, assuming that the measurement of the maximum current amplitude when the phase difference between the PWM timer counters of the power conversion device 100 and the power conversion device 101 is driven from 0 degrees to 180 degrees for each phase adjustment width Phase_setnum has been completed.

In addition, when the value of the phase difference adjustment amount Phase_sub has not reached 180 degrees, the phase difference between the PWM timer counters of the power conversion device 100 and the power conversion device 101 has not been changed up to 180 degrees. Therefore, the phase synchronization adjuster 403 proceeds to Process 802 and continues the phase adjustment process.

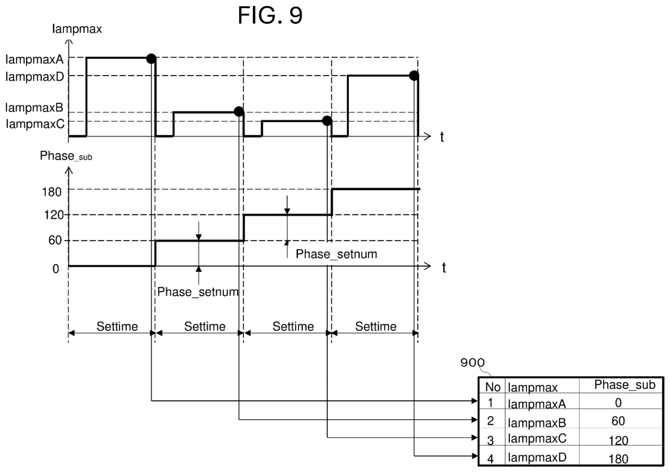

In Process 807, the phase synchronization adjuster 403 sets the phase difference adjustment amount Phase_sub under the condition that the maximum current amplitude value Iampmax stored in the current amplitude storage unit 402 is the smallest such that the current amplitude value is the smallest, and the phase adjustment process proceeds to Process 808. Then, the phase adjustment function is ended. The procedure in Process 807 will be described with reference to Fig. 9.

Fig. 9 shows a data flow for storing the maximum current amplitude value Iampmax for each phase difference adjustment amount Phase_sub and the phase difference adjustment amount Phase_sub in the current amplitude storage unit 402.

The maximum current amplitude value Iampmax and the phase difference adjustment amount Phase_sub are as shown in Fig. 7.

900 indicates a data table of the current amplitude storage unit 402 in this embodiment. That is, the maximum current amplitude value Iampmax after the lapse of the measurement timer counter Settime for each phase difference adjustment amount Phase_sub and the phase difference adjustment amount Phase_sub are stored in the data table 900 of the current amplitude storage unit, and a storage destination thereof is managed by No.

After the maximum current amplitude value Iampmax is stored under all conditions of the phase difference adjustment amount Phase_sub, the phase difference adjustment amount Phase_sub stored in the data table No. having the smallest maximum current amplitude value Iampmax is determined to be the most optimal phase difference adjustment amount Phase_sub under the measurement conditions.

According to this embodiment, it is possible to suppress current pulsation in a parallel control system for power conversion devices that includes a plurality of power conversion devices.

### [Embodiment 2]

In Embodiment 2, a phase adjustment procedure different from that in Embodiment 1 will be described. The phase adjustment function performs adjustment to suppress the current amplitude value to be adjusted. However, there is a case where it is sufficient to largely suppress the influence of the current amplitude value on the operation of the power conversion device. Therefore, when the phase difference adjustment amount Phase_sub at which the current amplitude value is equal to or less than a preset value is obtained by the phase adjustment function shown in Fig. 8, it may be determined to be the optimal phase difference adjustment amount Phase_sub.

In addition, in Embodiments 1 and 2, the process of the microcomputer incorporated in the control device has been described as an example. However, the present invention is not limited to this configuration, and a configuration may be adopted in which the phase adjuster is disposed in a higher-level device or an external device, and the higher-level device or the external device controls the parallel control system for power conversion devices.

According to this embodiment, the optimal phase difference adjustment amount can be determined by a process different from that in Embodiment 1, and it is possible to suppress current pulsation in the parallel control system for power conversion devices that includes a plurality of power conversion devices.

### [Embodiment 3]

This embodiment shows an example of a configuration different from that in Embodiment 1 or Embodiment 2. For example, a general boost chopper circuit is used as the ACDC conversion circuit. However, a step-down chopper circuit or a step-up/down chopper circuit may also be used. In addition, a PFC circuit may be used.

The same applies to the DCDC conversion circuit in the stage behind the ACDC conversion circuit, and the secondary side of the transformer may be a center-tapped type.

In addition, instead of the DC-DC conversion circuit, a configuration that outputs a three-phase alternating current converted into AC, such as a general inverter, may be applied to Embodiment 1 or Embodiment 2. In this case, it is possible to obtain the same effects as those in Embodiment 1 or Embodiment 2.

### REFERENCE SIGNS LIST

- 100: Power conversion device
- 101: Power conversion device
- 102: Alternating-current power supply
- 103: Target load
- 104: ACDC circuit
- 105: Intermediate capacitor
- 106: DCDC circuit
- 107: Output-side capacitor
- 108: ACDC controller
- 109: DCDC controller
- 110: Phase adjuster
- 111: Current detector
- 112: Voltage detector
- 113: Voltage detector
- 114: ACDC circuit
- 115: Intermediate capacitor
- 116: DCDC circuit
- 117: Output-side capacitor
- 118: ACDC controller
- 119: DCDC controller
- 120: Phase adjuster
- 121: Current detector
- 122: Voltage detector
- 123: Voltage detector
- Iin-A: Input current
- Iin-B: Input current
- Vo: Output voltage
- Iout: Load current

## Claims

1. A parallel control system for power conversion devices having a first power conversion device and a second power conversion device connected to a load device, the parallel control system for power conversion devices comprising:
a current detection unit detecting a current of the first power conversion device; and
a phase adjustment unit calculating a phase difference between a control signal of the first power conversion device and a control signal of the second power conversion device, based on an amplitude of the detected current, such that pulsation of the current is reduced.

2. The parallel control system for power conversion devices according to claim 1,
wherein the current detection unit detects an input current of the first power conversion device or a rectified current of the first power conversion device, and
the phase adjustment unit has a current amplitude width measurement unit measuring a current amplitude of the input current or the rectified current.

3. The parallel control system for power conversion devices according to claim 2,
wherein the phase adjustment unit has a current amplitude storage unit storing a current amplitude value of the input current or the rectified current and a phase adjustment amount corresponding to the current amplitude value.

4. The parallel control system for power conversion devices according to claim 3,
wherein the phase adjustment unit has a phase synchronization adjustment unit selecting the phase difference based on the current amplitude value stored in the current amplitude storage unit.

5. The parallel control system for power conversion devices according to claim 4,
wherein the phase synchronization adjustment unit transmits the selected phase difference to the second power conversion device.

6. The parallel control system for power conversion devices according to claim 1,
wherein the phase adjustment unit has a phase synchronization adjustment unit determining the phase difference based on the amplitude of the detected current and a predetermined setting value.

7. The parallel control system for power conversion devices according to claim 1,
wherein each of the first power conversion device and the second power conversion device has an ACDC circuit converting an alternating-current voltage into a direct-current voltage and a DCDC circuit that transforms the direct-current voltage from the ACDC circuit and is connected to the load device.

8. The parallel control system for power conversion devices according to claim 7,
wherein each of the first power conversion device and the second power conversion device has an inverter converting a direct-current voltage into an alternating-current voltage.

9. The parallel control system for power conversion devices according to claim 1,
wherein the first power conversion device and the second power conversion device have switching elements switching on and off.
